# EUROPÄISCHE PATENTANMELDUNG

(11) **EP 4 249 202 A2**
(43) Veröffentlichungstag der Anmeldung: **27.09.2023**
(21) Anmeldenummer: 23189458.5
(22) Anmeldetag: 16.10.2020
(51) Int. Cl.: B29C 45/27

(54) **VERFAHREN ZUM BETRIEB EINER NADELVERSCHLUSSDÜSE**

(30) Priorität: 16.10.2019 DE 102019127988
(62) Teilanmeldung aus: 20202281.0
(71) Anmelder: Günther Heisskanaltechnik GmbH, 35066 Frankenberg (DE)
(72) Erfinder: SOMMER, Siegrid, 35099 Burgwald (DE); GÜNTHER, Herbert, 35108 Allendorf (DE); SCHNELL, Torsten, 35104 Lichtenfels (DE); SOMMER, Dr. Stefan, 35099 Burgwald (DE)
(74) Vertreter: Patentanwälte Olbricht Buchhold Keulertz

(57) **Zusammenfassung**

Vorgeschlagen wird ein Verfahren zum Betrieb einer Nadelverschlussdüse in einer Spritzgießvorrichtung, umfassend die folgenden Schritte:
a) Vorgeben zumindest eines Prozessparameters für die Nadelverschlussdüse;
b) Verstellen der Verschlussnadel aus ihrer Schließstellung in ihre Öffnungsstellung;
c) Einspritzen einer Menge an fluider Masse in die Formkavität;
d) Verstellen der Verschlussnadel aus ihrer Öffnungsstellung in ihre Schließstellung;
e) Vergleichen des in der Formkavität ausgeformten Produktes und/oder von zumindest einem während des Einspritzens erfassten Prozessparameters mit zumindest einem vordefinierten Qualitätskriterium, um zu ermitteln, ob die Formkavitätsfüllmenge zu groß oder zu gering war,
f) im Fall einer zu großen eingespritzten Formkavitätsfüllmenge: Verändern eines oder mehrerer Prozessparameter entsprechend;
g) im Fall einer zu geringen eingespritzten Formkavitätsfüllmenge: Verändern eines oder mehrerer Prozessparameter entsprechend;
h) Durchführen der Schritte a bis e und f oder g in iterativer Weise, bis das Vergleichen ergibt, dass das Produkt dem vordefinierten Qualitätskriterium entspricht.

## Beschreibung

Die Erfindung betrifft ein Verfahren zum Betrieb einer Nadelverschlussdüse.

Heißkanaldüsen und Spritzgießwerkzeuge sind allgemein bekannt. Sie werden üblicherweise bei der Verarbeitung von Materialien, beispielsweise thermoplastischen Materialien oder Flüssiksilikonen), mittels Spritzgusstechnik verwendet, die erst bei einer gewissen Mindesttemperatur fließfähig und somit formbar sind. Dazu ist es notwendig, die Heißkanaldüse auf diese - vom zu verarbeitenden Werkstoff abhängige - Mindesttemperatur zu bringen und dort zu halten, was üblicherweise mit Hilfe von Heizvorrichtungen geschieht. Heißkanaldüsen können als Nadelverschlussdüse ausgebildet sein, umfassend eine Verschlussnadel, welche die Nadelverschlussdüse längsverschieblich entlang eines Hubwegs durchsetzt und mittels eines Antriebs zwischen einer Öffnungs- und einer die Austrittsöffnung der Düse verschließende Schließstellung verstellbar ist.

Das fließfähige Material wird bei einer vorgebbaren Temperatur sowie unter hohem Druck einem trennbaren Werkzeugblock (Formnest) zugeführt. Hierzu sind meist an einem temperierbaren Verteilersystem mehrere - ebenfalls temperierbare - Heißkanaldüsen montiert, die das zu verarbeitende Material über einen Strömungskanal dosiert in das Formnest bzw. die Formkavität leiten. Dort bildet das Material ein mit der Formkavität korrespondierendes Produkt aus.

Die Qualität des spritzgegossenen Produktes hängt unter anderem davon ab, ob die in die Formkavität eingeleitete Füllmenge des Materials entsprechend geeignet bemessen ist, um beispielsweise Spritzgussfehler zu vermeiden. Spritzgussfehler aufgrund falscher Materialmengendosierung können beispielsweise Einfallstellen, eine unvollständige Kavitätsfüllung, Schwimmhäute oder Vakuolen sein. Es können auch weitere Qualitätskriterien herangezogen werden, um die Qualität des spritzgegossenen Produktes zu bemessen. Um diese Qualitätskriterien zu erfüllen, kann zunächst vor Produktionsbeginn eine qualitätssichernden Formkavitätsfüllmenge simulativ berechnet oder iterativ oder empirisch Ermittelt werden.

Eine Möglichkeit zur Regulierung der in die Formkavität einleitbaren Füllmenge des Materials ist eine Steuerung des Nadelhubes. Der Hubweg bzw. dessen Länge und die Hubgeschwindigkeit der Verschlussnadel können einstellbar sein. Hierzu schlägt beispielsweise die EP 3 299 140 B1 eine Steuerung einer Nadelhubgeschwindigkeit derart vor, dass je nach erfasstem Systemzustand eine als Ventilstift bezeichnete Verschlussnadel mit unterschiedlichen Geschwindigkeiten innerhalb eines Hubes verfahren wird. Dieser Ansatz erfordert jedoch erhebliche Echtzeitsensorik und entsprechende Regelungsmittel, so dass dieses Verfahren als komplex und aufwändig bezeichnet werden kann.

Die WO 2017/144344 A1 offenbart laut ihres Titels ein Verfahren zur Durchführung eines zyklischen Produktionsprozesses, wobei gemäß des allgemein gehaltenen Hauptanspruchs das Verfahren vorsieht: Ändern mindestens einer Prozesseinstellgrösse; Ermitteln für eine geänderte Prozesseinstellgrösse automatisiert mindestens eine Prozesskenngrössenvariante; Automatisches Prüfen, ob sich die ermittelte Prozesskenngrössenvariante innerhalb einer Prozessstabilitätsgrenze befindet und prozessstabil ist; Kontrollieren, ob das Qualitätsmerkmal der mit einer geänderten Prozesseinstellgrösse produzierten Güter innerhalb der Qualitätstoleranz der produzierten Güter liegt und somit Gutteile produziert worden sind; und automatisiertes Bilden einer Prozesskenngrössenzone mit mindestens einer ermittelten Prozesskenngrössenvariante, die prozessstabil ist und deren Prozesseinstellgrösse Gutteile produziert. Das Verfahren schlägt also die Ermittlung einer Prozesskenngrössenzone vor, welcher sich durch Ändern der Prozesseinstellgrössen angenähert werden soll, um ein Abdriften des Spritzgießprozesses aus einem stabilen Zustand zu verhindern. Dieser Prozess kann insbesondere aufgrund der obligatorischen Prüfung auf Prozessstabilität und dem umfangreichen Prüfverfahren zur Ausbildung der Prozesskenngrössenzone als aufwändig bezeichnet werden.

Aufgabe der vorliegenden Erfindung ist es daher, ein Verfahren zum Betrieb einer Nadelverschlussdüse in einer Spritzgießvorrichtung vorzuschlagen, insbesondere ein Verfahren zur initialen Ermittlung einer qualitätssichernden Formkavitätsfüllmenge, welches in möglichst einfacher Weise eine vordefinierte Qualität eines spritzgegossenen Produktes gewährleistet.

Hauptmerkmale der Erfindung sind in Anspruch 1 angegeben. Ausgestaltungen sind Gegenstand der Ansprüche 2 bis 8. Die Aufgabe wird gelöst durch die Merkmale des unabhängigen Anspruchs. Vorteilhafte Weiterbildungen sind Gegenstand der abhängigen Ansprüche sowie der folgenden Beschreibung.

Erfindungsgemäß wird also ein Verfahren zum Betrieb einer Nadelverschlussdüse in einer Spritzgießvorrichtung vorgeschlagen, insbesondere ein Verfahren zur initialen Ermittlung einer qualitätssichernden Formkavitätsfüllmenge, wobei die Spritzgießvorrichtung umfasst:
- eine Nadelverschlussdüse mit zumindest einer Austrittsöffnung,
- zumindest eine Verschlussnadel, welche die Nadelverschlussdüse längsverschieblich entlang eines Hubweges variabler Länge durchsetzt und mittels eines Antriebs ausschließlich zwischen einer Öffnungs- und einer die Austrittsöffnung verschließende Schließstellung verstellbar ist, und
- eine Formkavität, welche fluidisch mit der Nadelverschlussdüse verbunden ist, umfassend die folgenden Schritte:
   a. Vorgeben zumindest eines Prozessparameters für die Nadelverschlussdüse, ausgewählt aus der Gruppe umfassend Nadelhubweg, Nadelhubgeschwindigkeit, Nadelhubbeschleunigung, Düsentemperatur und Austrittsöffnungsdauer;
   b. Verstellen der Verschlussnadel aus ihrer Schließstellung in ihre Öffnungsstellung entsprechend des mindestens einen Prozessparameters mit einer vor der Verstellung definierten kontinuierlichen Nadelhubgeschwindigkeit;
   c. Einspritzen einer Menge an fluider Masse in die Formkavität;
   d. Verstellen der Verschlussnadel aus ihrer Öffnungsstellung in ihre Schließstellung entsprechend des Prozessparameters mit einer kontinuierlichen Nadelhubgeschwindigkeit;
   e. Vergleichen des in der Formkavität ausgeformten Produktes und/oder von zumindest einem während des Einspritzens erfassten Prozessparameters mit zumindest einem vordefinierten Qualitätskriterium, um zu ermitteln, ob die Formkavitätsfüllmenge zu groß oder zu gering war,
   f. im Fall einer zu großen eingespritzten Formkavitätsfüllmenge:
      i. Reduzieren des Nadelhubwegs für eine anschließende Iteration, und/oder
      ii. Erhöhen der Nadelhubgeschwindigkeit für eine anschließende Iteration für das Verstellen der Verschlussnadel aus ihrer Schließstellung in ihre Öffnungsstellung und/oder für das Verstellen der Verschlussnadel aus ihrer Öffnungsstellung in ihre Schließstellung, und/oder
      iii. Reduzieren einer Nadelhubbeschleunigung für eine anschließende Iteration und/oder
      iv. Reduzieren einer Düsentemperatur für eine anschließende Iteration und/oder
      v. Reduzieren der Austrittsöffnungsdauer für eine anschließende Iteration, und
      vi. Festlegen des zumindest einen wertveränderten Prozessparameters als neuer vorgegebener Prozessparameter,
   g. im Fall einer zu geringen eingespritzten Formkavitätsfüllmenge
      i. Erhöhen des Nadelhubwegs für eine anschließende Iteration, und/oder
      ii. Reduzieren der Nadelhubgeschwindigkeit für eine anschließende Iteration für das Verstellen der Verschlussnadel aus ihrer Schließstellung in ihre Öffnungsstellung und/oder für das Verstellen der Verschlussnadel aus ihrer Öffnungsstellung in ihre Schließstellung, und/oder
      iii. Erhöhen einer Nadelhubbeschleunigung für eine anschließende Iteration und/oder
      iv. Erhöhen einer Düsentemperatur für eine anschließende Iteration und/oder
      v. Erhöhen der Austrittsöffnungsdauer für eine anschließende Iteration, und
      vi. Festlegen des zumindest einen wertveränderten Prozessparameters als neuer vorgegebener Prozessparameter,
   h. Durchführen der Schritte a bis e und f oder g in iterativer Weise bis das Vergleichen ergibt, dass das Produkt dem vordefinierten Qualitätskriterium entspricht.

Als "Hubweg" soll die Strecke zwischen der Schließstellung und derjenigen Stellung der Verschlussnadel aufgefasst werden, in welcher sie zum Stillstand kommt, um nachfolgend in die Schließstellung verfahren zu werden (=Öffnungsstellung). Die Füllmenge der Kavität ist dann eine gewünschte Füllmenge, wenn das mindestens eine vordefinierte Qualitätskriterium erfüllt ist.

Das Erfordernis nach einem gegenüber dem bekannten Stand der Technik vereinfachten Verfahren schließt die Nutzung bisher verwendeter aufwändiger Sensorik und ggf. Echtzeitsensorik aus. Die Verschlussnadel fährt daher während eines einzigen Hubweges keine Zwischenstellung an oder verbleibt dort. Die Verschlussnadel ist vielmehr ausschließlich zwischen der Schließ- und der Öffnungsstellung verstellbar. Die Verschlussnadel bewegt sich während eines einzigen Hubweges nicht mit unterschiedlichen Geschwindigkeiten. Vielmehr wird die Verschlussnadel mit einer über den gesamten Hubweg eines Hubes konstanten Verfahrgeschwindigkeit verstellt. Das erfindungsgemäße Verfahren bedarf aufgrund der konstanten Verstellgeschwindigkeit keiner eigens dafür vorgesehenen Sensorik zur Erfassung von Verschlussnadelnpositionen. Bisher musste nämlich zu jedem Zeitpunkt die Position der Verschlussnadeln bekannt sein, um bei Vorliegen eines Kriteriums die Verfahrgeschwindigkeit der Verschlussnadeln entsprechend verändern zu können. Auch an dieser Stelle reduziert die Erfindung die bisher bekannte Verfahrenskomplexität, da die mittels Sensoren überwachte Verschlussnadelnposition als Information nicht mehr von einem Regelkreis verarbeitet werden muss.

Das erfindungsgemäße Verfahren reduziert daher in überraschend einfacher Weise die Komplexität bekannter Verfahren erheblich. Dies ist möglich, da das Verfahren auf einer iterativen Annäherung an gewünschte Prozessparameter beruht, welche eine gewünschte Produktqualität ermöglichen. Hierzu wird zunächst zumindest ein Prozessparameter als Ausgangswert vorgegeben und basierend darauf ein erster Spritzgießvorgang durchgeführt. Ein Spritzgießvorgang umfasst zumindest ein Einspritzen von Material in die Kavität, ggf. ein Nachdrücken und Abkühlen des Materials in der Kavität sowie ein Entformen des aus dem Material geformten Produkts aus der Kavität. Anschließend wird entweder das Produkt mit zumindest einem zuvor definierten Qualitätskriterium verglichen oder zumindest ein während des Einspritzens erfasster Prozessparameter mit zumindest einem zuvor definierten Qualitätskriterium verglichen oder beides. Das Produkt kann beispielsweise händisch oder automatisch vermessen werden, um es zu vergleichen. Das Ergebnis kann entweder lauten, dass das Qualitätskriterium erfüllt oder nicht erfüllt ist. Sofern das Qualitätskriterium erfüllt ist, liegt eine qualitätskriteriumerfüllende und somit gewünschte Füllmenge vor und das Verfahren kann beendet werden. Ist das Qualitätskriterium jedoch nicht erfüllt, so kann anhand der Art und/oder der numerischen Größe der Nichterfüllung darauf geschlossen werden, ob die eingespritzte Formkavitätsfüllmenge zu groß oder zu klein war. Davon abhängig wird/werden im Anschluss ein oder mehrere Prozessparameter (Nadelhubweg, Nadelhubgeschwindigkeit, Nadelhubbeschleunigung, Düsentemperatur und Austrittsöffnungsdauer) entsprechend verändert und eine nachfolgende Iteration durchgeführt. Dies kann so lange erfolgen, bis gewünschte Prozessparameter für die Nadelverschlussdüse ermittelt sind.

Der Nadelhubweg kann beispielsweise dadurch verändert werden, dass die Öffnungsstellung der Verschlussnadel von der Schließstellung räumlich weiter entfernt angeordnet wird (Erhöhung) oder näher an die Schließstellung herangerückt wird (Reduzierung). Die Nadelhubgeschwindigkeit kann beispielsweise durch entsprechende Ansteuerung des Antriebs verändert werden. Gleiches gilt für die Nadelhubbeschleunigung. Die Düsentemperatur kann beispielsweise vermittels einer Steuerung verändert werden und die Austrittsöffnungsdauer kann beispielsweise dadurch verändert werden, dass die Verlussnadel länger (Erhöhung) oder kürzer (Reduzierung) in ihrer Offenstellung verharrt. Einzelne Prozessparameter können sich auch gegenseitig beeinflussen.

Gemäß einer Weiterbildung des erfindungsgemäßen Verfahrens wird unmittelbar nach dem Verstellen der Verschlussnadel in ihre Schließstellung als Messwert ein Formkavitätsinnendruck und/oder eine Formkavitätswandtemperatur und/oder ein optisches oder mechanisches Qualitätsmerkmal erfasst. Dieser Messwert kann als numerische Beschreibung des Produktes oder Prozessparameters dienen, um den Vergleich auf einfachem Wege durchzuführen.

Es ist auch denkbar, dass der erfasste Messwert in einer Datenbank gespeichert wird. Dieser Messwert kann beispielsweise genutzt werden, um einen oder mehrere Prozessparameter bei nachfolgenden Anwendungen des Verfahrens zu ermitteln, beispielsweise bei Ermittlung einer Formkavitätsfüllmenge bei vergleichbaren Formkavitäten, da das Ergebnis oder die Auswirkung eines Prozessparameters abgeschätzt werden kann und somit bereits ein Prozessparameter vorgebbar ist, der mutmaßlich bereits an den Prozessparameter angenähert ist, der mit einer geeigneten Formkavitätsfüllmenge korrespondiert.

Weiterbildungsgemäß können die Prozessparameter in einer Datenbank gespeichert werden, falls das Produkt dem mindestens einen vordefinierten Qualitätskriterium entspricht. Dieser Messwert kann beispielsweise als Ausgangswert des Verfahrens genutzt werden, für den Fall, dass bei vergleichbaren Formkavitäten eine Formkavitätsfüllmenge zu ermitteln ist.

Denkbar ist auch, dass die Spritzgießvorrichtung zumindest eine Formkavität umfasst und jeder Formkavität zumindest eine separate Nadelverschlussdüse zugeordnet ist, wobei die Prozessparameter für jede Nadelverschlussdüse separat vorgegeben und festgelegt werden können. In vorteilhafter Weise ist das erfindungsgemäße Verfahren nämlich auch bei einer Mehrfachkavität anwendbar, also wenn mehrere Kavitäten zu füllen und mehrere Nadelverschlussdüsen einzustellen sind. Das Verfahren kann dann vorsehen, dass das Vergleichen des in der Formkavität ausgeformten Produktes und/oder von zumindest einem während des Einspritzens erfassten Prozessparameters mit zumindest einem vordefinierten Qualitätskriterium, um zu ermitteln, ob die Formkavitätsfüllmenge zu groß oder zu gering war, kavitätsbezogen erfolgt und das Ergebnis aus diesem Vergleich der der Kavität zugeordneten Nadelverschlussdüse hinsichtlich Erhöhung/Reduktion eines/mehrerer Prozessparameter zu Gute kommt.

Weiterbildungsgemäß erfolgt die Verstellung der Verschlussnadel mittels eines als Antrieb dienenden Schrittmotors oder Servomotors, welcher vorzugsweise einen Encoder umfasst, und/oder vorzugsweise ein Positionsabfragemittel aufweist, und/oder vorzugsweise pneumatisch, hydraulisch oder elektrisch betreibbar ist. Das Positionsabfragemittel kann so ausgebildet sein, dass es Positionen der Verschlussnadel ausschließlich in deren Öffnungs- und/oder Schließstellung erfasst, nicht jedoch dazwischen.

Das Verfahren kann derart ausgebildet sein, dass eine Echtzeitposition der Verschlussnadel nicht von einer Sensorik erfasst wird. Das erfindungsgemäße Verfahren ist nämlich auch ohne diese Daten in einfacher Weise ausführbar. Als Sensorik soll eine solche verstanden werden, welche ausschließlich oder zumindest primär der Erfassung der Position der Nadel dient. Sofern diese Daten ohnehin entstehen, beispielsweise durch einen Encoder, werden diese zumindest nicht in dem Verfahren verwendet. Die aktuelle Position der Verschlussnadel ist nämlich für das vorgeschlagene Verfahren nicht nötig.

Erfindungsgemäß kann das Verfahren vorsehen, dass die Verschlussnadel zwischen ihrer Öffnungs- und ihrer Schließstellung nicht in dazwischenliegende Zwischenstellungen verfahren wird. Eine Zwischenstellung liegt beispielsweise dann vor, wenn sich innerhalb eines Hubes eine Verfahrgeschwindigkeit der Verschlussnadel von einer ersten Geschwindigkeit zu einer zweiten dergegenüber veränderten Geschwindigkeit ändert. Die Nadelposition, an welcher die Geschwindigkeitsänderung wirksam wird, soll als Zwischenstellungen gelten. Eine Zwischenstellungen kann auch gegeben sein, wenn die Verschlussnadel auf einem Hubweg angehalten und dann erneut in die gleiche Richtung verfahren wird.

Weitere Ausführungsbeispiele, Merkmale und Vorteile der Erfindung ergeben sich aus der nachfolgenden Beschreibung eines speziellen Ausführungsbeispiels. Es zeigen:
- Fig. 1:: eine vergrößerte Axialschnittansicht des unteren Endes einer exemplarischen Nadelverschlussdüse und

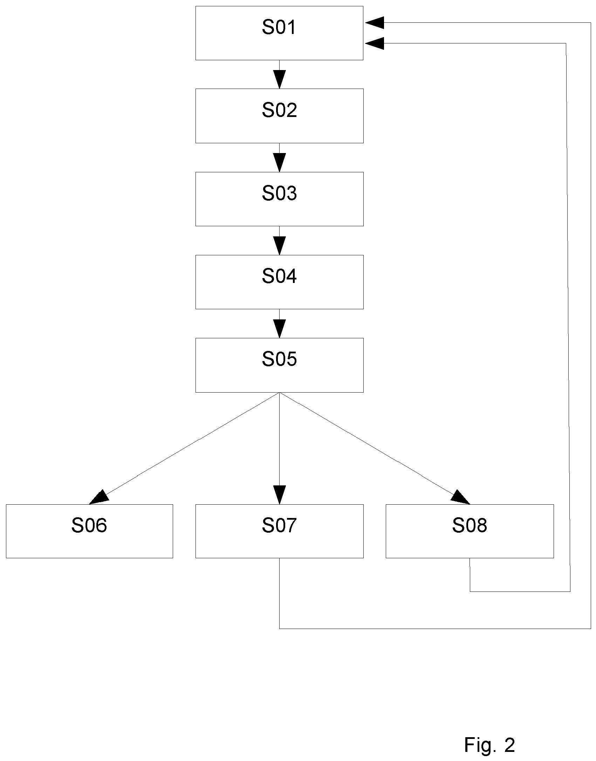

- Fig. 2:: ein Ablaufdiagramm eines erfindungsgemäßen Verfahrens.

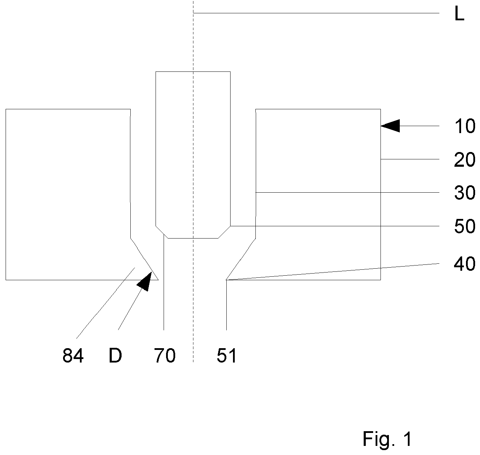

Die in Fig. 1 allgemein mit 10 bezeichnete Nadelverschlußdüse ist Bestandteil eines (nicht weiter dargestellten) Spritzgießwerkzeugs. Sie hat einen bevorzugt außenbeheizten Düsenkörper 20, in dem ein (nicht sichtbares) Materialrohr ausgebildet ist, das konzentrisch zur Längsachse L der Nadelverschlußdüse 10 einen Schmelzekanal 30 begrenzt. Über den Schmelzekanal 30 und eine Austrittsöffnung 40 ist eine zu verarbeitende Schmelze, beispielsweise eine Metall-, Silikon- oder Kunststoffschmelze, einem (nicht näher gezeigten) Formnest zuführbar. Die Formkavität ist also fluidisch mit der Nadelverschlussdüse verbunden.

Zum Öffnen und Schließen der Austrittsöffnung 40 ist eine axial verschiebbare Verschlussnadel 50 vorgesehen, die den Schmelzekanal 30 längsverschieblich durchsetzt und mittels eines (nicht dargestellten) Antriebs von einer Öffnungsstellung in eine Schließstellung gebracht werden kann, wobei eine Öffnungsstellung abgebildet ist. Die zumindest abschnittsweise zylindrisch ausgebildete Verschlussnadel 50 weist endseitig einen Verschlußteil 70 auf, der in Schließstellung durch einen Endabschnitt 84 des Düsenkörpers 20 hindurch in einen zylindrischen Dichtsitz D eingreift. Dieser ist im Ausführungsbeispiel der Fig. 1 vor einer Angußöffnung 51 eingebracht und in seinem oberen Bereich konisch ausgebildet, damit der Verschlußteil 70 - unterstützt von der sich dort ansammelnden Schmelze - reibungsarm in den Dichtsitz D einfahren kann.

Das Verfahren zum Betrieb einer Nadelverschlussdüse in einer Spritzgießvorrichtung kann in Schritt S01 starten, wonach zumindest ein Prozessparameter für die Nadelverschlussdüse vorgegeben wird, ausgewählt aus der Gruppe umfassend: Nadelhubweg, Nadelhubgeschwindigkeit, Nadelhubbeschleunigung, Düsentemperatur und Austrittsöffnungsdauer. Der Wert des Prozessparameters kann frei wählbar sein oder auf Erfahrungswerten beruhen. Es kann ein solcher Wert gewählt werden, welcher eine möglichst qualitätssichernde Formkavitätsfüllmenge realisiert, um die Anzahl der Iterationen möglichst gering zu halten.

Anschließend wird gemäß S02 die Verschlussnadel 50 aus ihrer Schließstellung in ihre Öffnungsstellung entsprechend des mindestens einen Prozessparameters mit einer vor der Verstellung definierten kontinuierlichen Nadelhubgeschwindigkeit verstellt.

In S03 wird sodann eine definierte Menge an fluider Masse in die Formkavität eingespritzt. Dies erfolgt in Korrespondenz mit dem mindestens einen Prozessparameter.

Nach einer Einspritzdauer wird darauffolgend in S04 die Verschlussnadel 50 aus ihrer Öffnungsstellung in ihre Schließstellung entsprechend des Prozessparameters mit einer kontinuierlichen Nadelhubgeschwindigkeit verstellt.

Anschließend erfolgt die Evaluation des gegossenen Produktes und der Füllmenge in S05. Als Produkt gilt der in einem Spritzgussvorgang hergestellte Gegenstand. Daher produziert sowohl eine Einfach- wie auch eine Mehrfachkavität in einem Spritzgussvorgang ein Produkt. Eine Bewertung des Produkts kann auch abschnittsweise erfolgen. Hierzu wird das in der Formkavität ausgeformte Produkte und/oder zumindest ein während des Einspritzens erfasster Prozessparameter mit zumindest einem vordefinierten Qualitätskriterium verglichen, um zu ermitteln, ob die Formkavitätsfüllmenge zu groß, zu gering oder geeignet war. Sofern das Produkt ein oder mehrere Qualitätskriterien erfüllt, gilt die eingespritzte Menge als geeignet und das Verfahren kann beendet werden, wie S06 zeigt.

Sofern die Begutachtung des Produktes zeigt, dass die Formkavitätsfüllmenge eingangs zu groß gewählt wurde, erfolgt in S07 durch Veränderung eines oder mehrerer Prozessparameter eine Reduktion der Formkavitätsfüllmenge für die anschließende Iteration. Die Prozessparameter können in diesem Fall wie folgt geändert werden:
- Reduzieren des Nadelhubwegs für eine anschließende Iteration, und/oder
- Erhöhen der Nadelhubgeschwindigkeit für eine anschließende Iteration für das Verstellen der Verschlussnadel aus ihrer Schließstellung in ihre Öffnungsstellung und/oder für das Verstellen der Verschlussnadel aus ihrer Öffnungsstellung in ihre Schließstellung, und/oder
- Reduzieren einer Nadelhubbeschleunigung für eine anschließende Iteration und/oder
- Reduzieren einer Düsentemperatur für eine anschließende Iteration und/oder
- Reduzieren der Austrittsöffnungsdauer für eine anschließende Iteration.

Dieser zumindest eine wertveränderte Prozessparameter wird als neuer vorgegebener Prozessparameter festgelegt und das Verfahren wird ab Schritt S01 in der oben beschriebenen Reihenfolge erneut durchgeführt, um sich der geeigneten Formkavitätsfüllmenge anzunähern und zu erreichen.

Ergibt sich, dass die eingespritzten Formkavitätsfüllmenge eingangs zu gering gewählt wurde, erfolgt in S08 eine Veränderung eines oder mehrerer Prozessparameter dahingehen, dass eine Erhöhung der Formkavitätsfüllmenge für die anschließende Iteration erreicht werden soll. Die Prozessparameter können in diesem Fall wie folgt geändert werden:
- Erhöhen des Nadelhubwegs für eine anschließende Iteration, und/oder
- Reduzieren der Nadelhubgeschwindigkeit für eine anschließende Iteration für das Verstellen der Verschlussnadel aus ihrer Schließstellung in ihre Öffnungsstellung und/oder für das Verstellen der Verschlussnadel aus ihrer Öffnungsstellung in ihre Schließstellung, und/oder
- Erhöhen einer Nadelhubbeschleunigung für eine anschließende Iteration und/oder
- Erhöhen einer Düsentemperatur für eine anschließende Iteration und/oder
- Erhöhen der Austrittsöffnungsdauer für eine anschließende Iteration.

Dieser zumindest eine wertveränderte Prozessparameter wird als neuer vorgegebener Prozessparameter festgelegt und das Verfahren wird ab Schritt S01 in der oben beschriebenen Reihenfolge erneut durchgeführt, um sich der geeigneten Formkavitätsfüllmenge anzunähern und zu erreichen.

Diese Verfahrensschritte werden in iterativer Weise durchgeführt bis das Vergleichen ergibt, dass das Produkt dem mindestens einen vordefinierten Qualitätskriterium entspricht (S06). Das vordefinierte Qualitätskriterium kann auch ein Wertebereich sein.

Es ist denkbar, dass das Vergleichen ergibt, dass die Füllmenge zu groß oder zu gering war und ein nachfolgendes Vergleichen in der unmittelbar nachfolgenden Iteration das Gegenteil des ersten Vergleiches ergibt, nämlich, dass die Füllmenge zu gering oder zu groß war. Für eine nachfolgende, dritte Iteration, kann dann beispielsweise ein Zwischenwert des Prozesswertes (der Prozesswerte) der ersten und zweiten Iteration für die dritte Iteration gewählt werden.

Die Erfindung ist nicht auf eine der vorbeschriebenen Ausführungsformen beschränkt, sondern in vielfältiger Weise abwandelbar. Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

### Bezugszeichenliste

- 10: Nadelverschlußdüse
- 20: Düsenkörper
- 30: Schmelzekanal
- 40: Austrittsöffnung
- 50: Verschlussnadel
- 51: Angußöffnung
- 70: Verschlussteil
- 84: Endabschnitt

- D: Dichtsitz
- L: Längsachse

## Patentansprüche

1. Verfahren zum Betrieb einer Nadelverschlussdüse in einer Spritzgießvorrichtung, wobei die Spritzgießvorrichtung umfasst:
▪ eine Nadelverschlussdüse mit zumindest einer Austrittsöffnung,
▪ zumindest eine Verschlussnadel, welche die Nadelverschlussdüse längsverschieblich entlang eines Hubweges variabler Länge durchsetzt und mittels eines Antriebs ausschließlich zwischen einer Öffnungs- und einer die Austrittsöffnung verschließende Schließstellung verstellbar ist, und
▪ eine Formkavität, welche fluidisch mit der Nadelverschlussdüse verbunden ist, umfassend die folgenden Schritte:
a) Vorgeben zumindest eines Prozessparameters für die Nadelverschlussdüse, ausgewählt aus der Gruppe umfassend Düsentemperatur und Austrittsöffnungsdauer;
b) Verstellen der Verschlussnadel aus ihrer Schließstellung in ihre Öffnungsstellung entsprechend des mindestens einen Prozessparameters mit einer vor der Verstellung definierten kontinuierlichen Nadelhubgeschwindigkeit;
c) Einspritzen einer Menge an fluider Masse in die Formkavität;
d) Verstellen der Verschlussnadel aus ihrer Öffnungsstellung in ihre Schließstellung entsprechend des Prozessparameters mit einer kontinuierlichen Nadelhubgeschwindigkeit;
e) Vergleichen des in der Formkavität ausgeformten Produktes und/oder von zumindest einem während des Einspritzens erfassten Prozessparameters mit zumindest einem vordefinierten Qualitätskriterium, um zu ermitteln, ob die Formkavitätsfüllmenge zu groß oder zu gering war,
f) im Fall einer zu großen eingespritzten Formkavitätsfüllmenge:
i. Reduzieren einer Düsentemperatur für eine anschließende Iteration und/oder
ii. Reduzieren der Austrittsöffnungsdauer für eine anschließende Iteration, und
iii. Festlegen des zumindest einen wertveränderten Prozessparameters als neuer vorgegebener Prozessparameter,
g) im Fall einer zu geringen eingespritzten Formkavitätsfüllmenge
i. Erhöhen einer Düsentemperatur für eine anschließende Iteration und/oder
ii. Erhöhen der Austrittsöffnungsdauer für eine anschließende Iteration, und
iii. Festlegen des zumindest einen wertveränderten Prozessparameters als neuer vorgegebener Prozessparameter,
h) Durchführen der Schritte a) bis e) und f) oder g) in iterativer Weise, bis das Vergleichen ergibt, dass das Produkt dem vordefinierten Qualitätskriterium entspricht.

2. Verfahren nach Anspruch 1, **dadurch gekennzeichnet, dass** unmittelbar nach dem Verstellen der Verschlussnadel in ihre Schließstellung als Messwert ein Formkavitätsinnendruck und/oder eine Formkavitätswandtemperatur und/oder ein optisches oder mechanisches Qualitätsmerkmal erfasst wird.

3. Verfahren nach Anspruch 2, **dadurch gekennzeichnet, dass** der erfasste Messwert in einer Datenbank gespeichert wird.

4. Verfahren nach einem der vorangehenden Ansprüche, **dadurch gekennzeichnet, dass** die Prozessparameter in einer Datenbank gespeichert werden, falls das Produkt dem vordefinierten Qualitätskriterium entspricht.

5. Verfahren nach einem der vorangehenden Ansprüche, wobei die Spritzgießvorrichtung zumindest eine Formkavität umfasst und jeder Formkavität zumindest eine separate Nadelverschlussdüse zugeordnet ist, **dadurch gekennzeichnet, dass** die Prozessparameter für jede Nadelverschlussdüse separat vorgegeben und festgelegt werden.

6. Verfahren nach einem der vorangehenden Ansprüche, **dadurch gekennzeichnet, dass** die Verstellung der Verschlussnadel mittels eines als Antrieb dienenden Schrittmotors oder Servomotors erfolgt, welcher vorzugsweise einen Encoder umfasst, und/oder vorzugsweise ein Positionsabfragemittel aufweist, und/oder vorzugsweise pneumatisch, hydraulisch oder elektrisch betreibbar ist.

7. Verfahren nach einem der vorangehenden Ansprüche, **dadurch gekennzeichnet, dass** eine Echtzeitposition der Verschlussnadel nicht von einer Sensorik erfasst wird.

8. Verfahren nach einem der vorangehenden Ansprüche, **dadurch gekennzeichnet, dass** die Verschlussnadel zwischen ihrer Öffnungs- und ihrer Schließstellung nicht in dazwischenliegende Zwischenstellungen verfahren wird.
